# EUROPEAN PATENT APPLICATION

(11) **EP 4 793 123 A1**
(43) Date of publication of application: **19.08.2026**
(21) Application number: 25157866.2
(22) Date of filing: 14.02.2025
(51) Int. Cl.: B60W 40/12, B60W 50/14

(54) **ROLL SENSITIVITY OF A HEAVY-DUTY VEHICLE**

(71) Applicant: Volvo Truck Corporation, 405 08 Göteborg (SE)
(72) Inventor: Drenth, Edo, 256 71 Helsingborg (SE); Marzbanrad, Alireza, 417 65 Göteborg (SE)
(74) Representative: AWA Sweden AB

(57) **Abstract**

The present disclosure relates to a computer system (100) of a heavy-duty vehicle (1), comprising processing circuitry (10) configured to, during driving of the heavy-duty vehicle (1): read at least a roll rate value (*p*) and a yaw rate value (r) from an Inertial Measurement Unit, IMU, (20) mounted on a chassis of the heavy-duty vehicle (1); determine a roll sensitivity value (Cᵣₒₗₗ) as ${C}_{roll} = \frac{p}{u \dot{r}}$, wherein *u* is a longitudinal velocity value of the heavy-duty vehicle (1); and output the roll sensitivity value (Cᵣₒₗₗ).

## Description

### TECHNICAL FIELD

The disclosure relates generally to a computer system of a heavy-duty vehicle. In particular aspects, the disclosure relates to roll sensitivity of a heavy-duty vehicle. The disclosure can be applied to heavy-duty vehicles, such as trucks, buses, trailers, semi-trailers and construction equipment, among other vehicle types. Although the disclosure may be described with respect to a particular vehicle, the disclosure is not restricted to any particular vehicle.

### BACKGROUND

The present disclosure relates to stability of heavy-duty vehicle. To have control of the stability of a heavy-duty vehicle during driving is crucial in order to avoid accidents. The huge variety of loading conditions make it difficult to use a priori parameters for estimations. Solutions with sensors on the un-sprung mass are known but are not prevalent due to the incurred cost. There are known solutions for monitoring the stability of a heavy-duty vehicle, but due to their complexity and thereby costs such solutions are rarely used. For good estimations sensors of the un-sprung mass are required. Further, the high roll stiffness beyond chassis springs of the suspension makes it very difficult to estimate load transfer from suspension travel, for instance. Further, an accurate stability control may be important for the balance between safety and driving- and/or mission efficiency. In order not to negatively affect the driving- and/or mission efficiency, having consequences such as brake wear and increased fuel consumption, it may be important that the stability control do not intervene too often or too early.

Consequently, there is a need for a less complex way of monitoring the stability of a heavy-duty vehicle, improving the balance between safety and driving- and/or mission efficiency.

### SUMMARY

According to a first aspect of the disclosure, a computer system of a heavy-duty vehicle is provided, comprising processing circuitry configured to, during driving of the heavy-duty vehicle: read at least a roll rate value *p* and a yaw rate value *r* from an Inertial Measurement Unit, IMU, mounted on a chassis of the heavy-duty vehicle; determine a roll sensitivity value Cᵣₒₗₗ as ${C}_{roll} = \frac{p}{u \dot{r}}$, wherein *u* is a longitudinal velocity value of the heavy-duty vehicle; and output the roll sensitivity value. The roll sensitivity value is provided by dividing the roll rate value with the product of the longitudinal velocity value and the first derivative of the yaw rate value. The roll rate *p* may be a measure about the local axis frequently referred to as roll axis. The yaw rate r may be a measure about the local axis frequently referred to as yaw axis.

The first aspect of the disclosure may seek to estimate the roll susceptibility of the heavy-duty vehicle. A technical benefit may include to create a better balance between productivity and safety for the heavy-duty vehicle. The roll sensitivity value may further provide an efficient indication of the stability of the heavy-duty vehicle. The roll sensitivity value may function as an indirect measure of dynamic load distribution, which in turn may be an identifier of the stability of the heavy-duty vehicle. The computer system may improve the balance between road safety and mission efficiency of heavy-duty vehicles. It may be important not to intervene with the driving of the vehicle too early in situations of possible instability. Instead of involving brake test pulses at curve inner wheels as function of lateral acceleration as in example known methods, the present disclosure provides a less complicated way of improving stability control of heavy-duty vehicles. The simplicity of the present disclosure may also allow application on tankers exhibiting slosh. Further, laterally displaced load may cause different roll compliance in left- and right corners. Hence, as a side effect uneven load may be detected using the disclosed technology.

The processing circuitry may further be configured to receive or read the measured longitudinal velocity of the heavy-duty vehicle. The longitudinal velocity may be directly or indirectly read from one or more sensor on the heavy-duty vehicle, such as one or more wheel speed sensors. The processing circuitry may in examples receive the longitudinal velocity from another system of the heavy-duty vehicle. The processing circuitry of the computer system may in examples be configured to determine the roll sensitivity value during driving of the heavy-duty vehicle.

The roll rate, the yaw rate and/or the longitudinal velocity may be read and/or received continuously by the processing circuitry during driving of the heavy-duty vehicle. Using the roll rate value and the first derivative value of the yaw rate may reduce risk of issues related to signal drift due to accumulation of offset due to bias of the measured acceleration. It may be enough that the IMU can measure rotational degrees of freedom. The IMU may be arranged above an axle of the heavy-duty vehicle.

The processing circuitry may be configured to receive the longitudinal velocity value from, or determine the longitudinal velocity value based on, one or more measurement values from the IMU and/or one or more other sensors on the heavy-duty vehicle. The longitudinal velocity value may be a signal which is proportional to the velocity of the heavy-duty vehicle's travel over ground. There may not be a requirement of the longitudinal velocity value to be very accurate as long as it is consistently proportional with the heavy-duty vehicle's velocity of travel.

The IMU may be arranged on the chassis of a tractor of the heavy-duty vehicle, and/or on the chassis of a trailer of the heavy-duty vehicle. The determined roll sensitivity value may be related to the part of the heavy-duty vehicle (tractor, trailer) on which the IMU is arranged.

The computer system may enable an estimation of roll sensitivity of the heavy-duty vehicle without a need for estimation of absolute values of load mass, center of gravity height etc. Less uncertainty in the estimation may thereby be achieved. Using the derivative of the yaw rate, and the roll rate which may correspond to the first derivative of a roll angle, may further provide the technical effect of a robust determination with low sensibility to noise.

Optionally in some examples, including in at least one preferred example, the processing circuitry may be configured to output the roll sensitivity value, or a change in the roll sensitivity value, as an indication to a driver of the heavy-duty vehicle or to an autonomous system of the heavy-duty vehicle. The computer system may be configured to output an indication to the driver of the heavy-duty vehicle, or an autonomous system, or other system, of the vehicle, related to the roll sensitivity value. The indication may be an absolute value of the determined roll sensitivity value, an indication of a certain condition of the roll sensitivity value, and/or an indication of a change in the roll sensitivity value.

Optionally in some examples, including in at least one preferred example, the processing circuity may be configured to send an alert signal to a driver of the heavy-duty vehicle or to an autonomous system of the heavy-duty vehicle if the roll sensitivity value is above a predetermined threshold. The alert signal may have the purpose of alerting the driver or the autonomous system of a situation where the stability of the heavy-duty vehicle is at risk. When sent to a driver, the alert signal may have the purpose of indicating to the driver that action needs to be taken in order to improve the stability of the heavy-duty vehicle, such as controlling the speed and/or steering of the vehicle. When sent to an autonomous system of the heavy-duty vehicle, the alert signal may have the purpose of indicating to the autonomous system that control signals may need to be sent, which control signals may control speed, steering and/or suspension of the heavy-duty vehicle.

Optionally in some examples, including in at least one preferred example, the processing circuitry may be configured to send the alert signal to an indication unit of the heavy-duty vehicle, the indication unit being configured to provide an alert indication to the driver. The indication unit may comprise a display unit, a lighting device, a sound generating unit, or the like, configured to provide the alert indication to the driver as text information, symbol information, light signal, sound signal, or other visible or audible signal.

Optionally in some examples, including in at least one preferred example, the processing circuitry may be configured to, in response to the roll sensitivity value being above a predetermined threshold, send a control signal for control of speed, steering, and/or suspension of the heavy-duty vehicle. The roll sensitivity value being above a threshold may indicate a roll stability risk of the heavy-duty vehicle, and action may need to be taken to ensure continued stability the vehicle. For that purpose, a control signal may be issued to automatically take necessary action, such as controlling speed, steering and/or suspension signals of the heavy-duty vehicle. This may provide a roll stability control function in a closed loop controller. Instead of a specific threshold, adaptable margins for roll stability may be used for triggering a control signal.

Optionally in some examples, including in at least one preferred example, the computer system may comprise the autonomous system, and the autonomous system may be configured to control speed, steering, and/or suspension of the heavy-duty vehicle in response to the roll sensitivity value being above a predetermined threshold. The processing circuitry may output the roll sensitivity value, or an indication that the roll sensitivity value is above the predetermined threshold. The autonomous system, which may have a capability of controlling various functions of the heavy-duty vehicle in an automatic manner, may be configured to control speed, steering and/or suspension of the heavy-duty vehicle in response to the roll sensitivity value being above the threshold. The risk of issues caused by an instability of the heavy-duty vehicle may thereby efficiently be taken care of by the autonomous system, ensuring that the autonomous system operates within the roll stability margins of the heavy-duty vehicle.

Optionally in some examples, including in at least one preferred example, the IMU may be a 6 Degree of Freedom, DOF, IMU. A 6 DOF IMU may be a multipurpose sensor used in a heavy-duty vehicle. The present disclosure may provide a solution using a sensor that may already be present on a heavy-duty vehicle.

Optionally in some examples, including in at least one preferred example, the processing circuitry may be configured to determine the longitudinal velocity value of the heavy-duty vehicle based at least on a reading of a measurement from a sensor. The longitudinal velocity value of the heavy-duty vehicle may be determined or achieved in different ways. In some examples the processing circuitry may be configured to determine the longitudinal velocity. The determination may be based on at least one or more measurements by a sensor. The determination may provide a longitudinal velocity value that is proportional to the velocity of travel of the heavy-duty vehicle.

Optionally in some examples, including in at least one preferred example, the processing circuitry may be configured to receive the longitudinal velocity value of the heavy-duty vehicle as a representation of a velocity of travel of the heavy-duty vehicle. The longitudinal velocity value may be received from another unit in the heavy-duty vehicle. The other unit may be configured to estimate the longitudinal velocity value as a representation of the velocity of travel of the heavy-duty vehicle. The longitudinal velocity value may be proportional to the velocity of travel. The longitudinal value may not need to be accurate in absolute value relative to the velocity of travel.

Optionally in some examples, including in at least one preferred example, the processing circuitry may be configured to read a measurement of one or more wheel speed sensors and to determine the longitudinal velocity value of the heavy-duty vehicle based on at least the reading of one or more wheel speed sensors. The processing circuitry may be configured to receive a measurement value from a wheel speed sensor arranged on the heavy-duty vehicle. The wheel speed sensor may be arranged at any one of the wheels, or at two or more of the wheels, of the vehicle. The processing circuitry may determine the longitudinal velocity value of the heavy-duty vehicle based on at least a measurement value from one or more wheel speed sensors. The determined longitudinal velocity value may only need to be proportional to the velocity of travel of the heavy-duty vehicle. The processing circuitry may be configured to determine the longitudinal velocity value based on the measured wheel speed value and one or more measurements from the IMU. The measured wheel speed value may be fused with one or more measurement values from the IMU to determine the longitudinal velocity value. Using a measurement from the wheel speed sensor may provide a determination of the longitudinal velocity value with low noise.

Optionally in some examples, including in at least one preferred example, the longitudinal velocity value may be based on a signal proportional to a velocity of travel of the heavy-duty vehicle. The processing circuitry may be configured to receive the longitudinal velocity value from, or determine the longitudinal velocity value based on, one or more measurement values from the IMU and/or one or more other sensors on the heavy-duty vehicle. The longitudinal velocity value may alternatively be determined by another unit in the heavy-duty vehicle. As long as the longitudinal velocity value is a signal that is proportional to the velocity of travel of the heavy-duty vehicle, the longitudinal velocity value may not need to be accurate in absolute number in relation to the velocity of travel.

According to a second aspect of the disclosure, a heavy-duty vehicle is provided comprising the computer system as disclosed in any of the examples herein.

Optionally in some examples, including in at least one preferred example, the heavy-duty vehicle may comprise the IMU, and the IMU may be arranged on the chassis, above an axle, of the heavy-duty vehicle.

According to a third aspect of the disclosure, a computer-implemented method for determining a roll sensitivity value on a heavy-duty vehicle is provided, the method comprising the steps of, by processing circuitry of a computer system in the heavy-duty vehicle; reading at least a roll rate value *p* and a yaw rate value *r* from an Inertial Measurement Unit, IMU, mounted on a chassis of the heavy-duty vehicle; determining a roll sensitivity value Cᵣₒₗₗ as ${C}_{roll} = \frac{p}{u \dot{r}}$, wherein *u* is a longitudinal velocity value of the heavy-duty vehicle; and outputting the roll sensitivity value.

Optionally in some examples, including in at least one preferred example, the method may comprise outputting the roll sensitivity value, or a change in the roll sensitivity value, as an indication to a driver of the heavy-duty vehicle or to an autonomous system of the heavy-duty vehicle.

Optionally in some examples, including in at least one preferred example, the method may further comprise a step of sending an alert signal to a driver of the heavy-duty vehicle or to an autonomous system of the heavy-duty vehicle if the roll sensitivity value is above a predetermined threshold.

Optionally in some examples, including in at least one preferred example, the sending of the alert signal may comprise instructing an indication unit of the heavy-duty vehicle to provide an alert indication to the driver.

Optionally in some examples, including in at least one preferred example, the method may further comprise a step of controlling speed, steering and/or suspension signals of the heavy-duty vehicle based on the roll sensitivity value.

Optionally in some examples, including in at least one preferred example, the step of controlling speed, steering and/or suspension signals of the heavy-duty vehicle may be performed by an autonomous system of the heavy-duty vehicle in response to the roll sensitivity value being received by the autonomous system and being above a predetermined threshold.

Optionally in some examples, including in at least one preferred example, the IMU may be a 6 Degree of Freedom, DOF, IMU.

Optionally in some examples, including in at least one preferred example, the method may further comprise a step of determining the longitudinal velocity value of the heavy-duty vehicle based at least on a reading of a measurement from a sensor.

Optionally in some examples, including in at least one preferred example, the method may further comprise a step of receiving the longitudinal velocity value of the heavy-duty vehicle as a representation of a velocity of travel of the heavy-duty vehicle.

Optionally in some examples, including in at least one preferred example, the processing circuitry may be configured to read a measurement of one or more wheel speed sensors and to determine the longitudinal velocity of the heavy-duty vehicle based on at least the reading of one or more wheel speed sensors.

Optionally in some examples, including in at least one preferred example, the longitudinal velocity value may be based on a signal proportional to a velocity of travel of the heavy-duty vehicle.

According to a fourth aspect of the disclosure, a computer program product is provided comprising program code for performing, when executed by the processing circuitry, the method of any of the examples disclosed herein.

According to a fifth aspect of the disclosure, a non-transitory computer-readable storage medium is provided comprising instructions, which when executed by a processing circuitry, cause the processing circuitry to perform the method of the examples disclosed herein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary computer system according to an example.
**FIG. 2** is an exemplary heavy-duty vehicle according to an example.
**FIG. 3** is an exemplary computer system according to an example.
**FIG. 4** is an exemplary computer system according to an example.
**FIG. 5** is an exemplary method according to an example.
**FIG. 6** is an exemplary method according to an example.
**FIG. 7** is another view of the computer system of **FIG. 1****,** according to an example.

### DETAILED DESCRIPTION

The detailed description set forth below provides information and examples of the disclosed technology with sufficient detail to enable those skilled in the art to practice the disclosure.

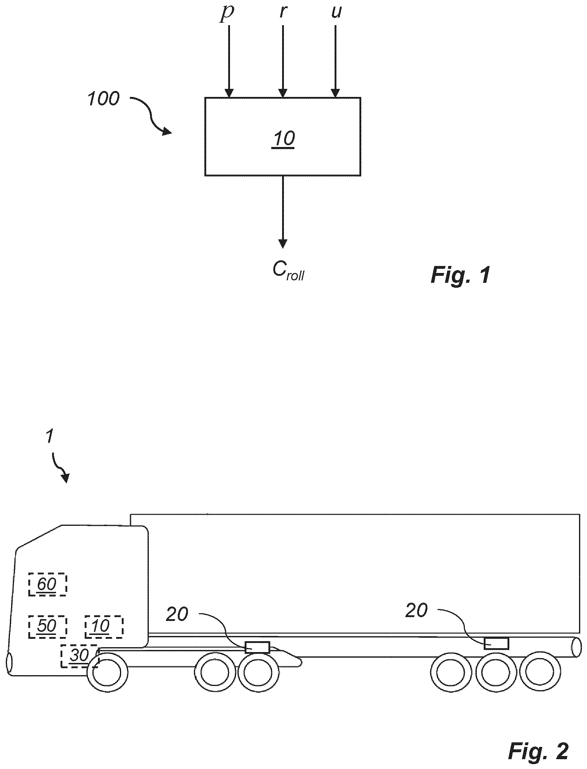

FIG. 1 is an exemplary computer system 100 of a heavy-duty vehicle 1 according to an example. The computer system 100 comprises processing circuitry 10 configured to, during driving of the heavy-duty vehicle 1, read at least roll rate *p* and a yaw rate *r* from an IMU 20 mounted on a chassis of the heavy-duty vehicle 1. The processing circuitry 10 is further configured to determine a roll sensitivity value Cᵣₒₗₗ according to ${C}_{roll} = \frac{p}{u \dot{r}}$*,* wherein *u* is the longitudinal velocity of the heavy-duty vehicle 1.

The longitudinal velocity *u* of the heavy-duty vehicle 1 may be read by the processing circuitry 10 from the IMU 20 or another sensor of the heavy-duty vehicle 1. Alternatively, the processing circuitry 10 may receive the longitudinal velocity *u* from another entity or system of the heavy-duty vehicle 1. In some examples, the processing circuitry 10 may read or receive a measurement from one or more wheel speed sensors 30 arranged at one or more of the wheels of the heavy-duty vehicle 1. The measured wheel speed sensor signal may be used by the processing circuitry 10 to determine the longitudinal velocity value *u*. The processing circuitry 10 may in some examples use only the wheel speed sensor signal to determine the longitudinal velocity *u*, or in other examples use a combination between the wheel speed sensor signal and a measurement read from the IMU 20The IMU 20 may be a 6 DOF IMU.

The processing circuitry 10 may be configured to read and/or receive the roll rate *p,* the yaw rate r and/or the longitudinal velocity *u* continuously during driving of the heavy-duty vehicle 1. In some examples the processing circuitry 10 is configured to determine the longitudinal velocity *u* based on one or more measurement inputs, such as from the IMU 20. The processing circuitry 10 may be configured to determine the longitudinal velocity continuously during driving of the heavy-duty vehicle 1.

FIG. 2 is an exemplary heavy-duty vehicle 1 comprising the computer system 100. The heavy-duty vehicle 1 further comprises the IMU 20. The IMU 20 is mounted on the chassis of the heavy-duty vehicle 1. The IMU 20 may be mounted above an axle of the heavy-duty vehicle 1. As illustrated in FIG. 2, the IMU 20 may be arranged on the tractor and/or on the trailer of the heavy-duty vehicle 1. The determined roll sensitivity value Cᵣₒₗₗ may relate to the part of the heavy-duty vehicle 1, the tractor and/or the trailer, on which the IMU 20 is arranged.

The heavy-duty vehicle 1 may further comprise a wheel speed sensor 30 arranged to one or more wheels of the heavy-duty vehicle 1. The heavy-duty vehicle 1 may comprise more than one wheel speed sensor 30 arranged at one or more wheels of the heavy-duty vehicle 1, on the tractor and/or the trailer of the heavy-duty vehicle 1.

The processing circuitry 10 of the computer system 100 may be configured to communicated with the IMU 20 via wire or wirelessly. The processing circuitry 10 may be configured to receive the measurement values from the IMU 20 directly or via an intermediate connection, such as a system bus or a wireless communication interface. The same may apply to the wheel speed sensor 30 when such is present.

The heavy-duty vehicle 1 may further comprise an autonomous system 50 configured to control one or more functions of the heavy-duty vehicle 1. The computer system 100 may output the roll sensitivity value Cᵣₒₗₗ to the autonomous system 50. The autonomous system 50 may be configured to control functionality of the heavy-duty vehicle 1, such as steering, speed or suspension, based on the received roll sensitivity value Cᵣₒₗₗ.

The heavy-duty vehicle 1 may comprise an indication unit 60, configured to provide an indication, such as an alert signal, to a driver of the heavy-duty vehicle 1, based on the roll sensitivity value Cᵣₒₗₗ. The indication unit 60 may be configured to receive the roll sensitivity value Cᵣₒₗₗ, and/or an alert signal, from the computer system 100. The alert signal may be provided as an instruction to provide an alert indication to the driver. The indication unit 60 may comprise a display unit, a lighting device, a sound generating unit, or the like, configured to provide the alert indication to the driver as text information, symbol information, light signal, sound signal, or other visible or audible signal.

The computer system 100 may be configured to output the roll sensitivity value Cᵣₒₗₗ to the indication unit 60 and/or the autonomous system 50 continuously or under predefined conditions. Such predefined conditions may be at predetermined time intervals, upon request from the autonomous system 50, the indication unit 60 or other system or unit of the heavy-duty vehicle 1, or when the roll sensitivity value Cᵣₒₗₗ fulfills a predetermined condition, such as being above or below a predetermined threshold or being within a predetermined interval. The predetermined condition of the roll sensitivity value Cᵣₒₗₗ may be set such that the output of the roll sensitivity value Cᵣₒₗₗ is an alert signal configured to alert the driver or the autonomous system 50 that there is a stability issue with the heavy-duty vehicle 1, and action may need to be taken.

In its simplest form the equations of motion for roll read $J {φ}^{¨} + d \dot{φ} + cφ = {mha}_{y} + mhgsinφ$

The roll inertia *J*, roll damping *d* and roll stiffness *c* with roll angle *φ* represent the mechanical system itself. The mass *m,* Center of Gravity, COG, height *h* and the gravitational acceleration g constitute the load as consequence of curve negotiations. The term *mhgsinφ* is an important destabilizing factor of lateral displacement of the mass center. With small angle approximations the term may be simplified to *mhgφ.* From vehicle dynamics it may be known that the lateral acceleration *a_{y}* in local coordinates may read ${a}_{y} = ur + \dot{v}$ Here *u* is the longitudinal velocity and *v* the lateral velocity of the heavy-duty vehicle 1 and *r* the yaw rate.

The equation may thereby be expressed as $J {φ}^{¨} + d \dot{φ} + cφ = mh \left(ur+\dot{v}+gφ\right) .$

The IMU 20 may measure local accelerations and angular rates. The lateral acceleration of IMU sensor 20 may be systematically distorted by the gravitational component and roll and pitch angles: ${a}_{{y}_{IMU}} = {a}_{y} cosφ + gsinφ$ The angular rate about the local vertical (*z*-) axis may usually be interpreted as the yaw rate. The distortion may be limited by small angle approach for roll and pitch, providing the cosine of both angles to be equal to one.

The roll angle φ may be difficult to obtain from the measurements. Integration of measured signals may be inherently problematic with regard to signal drift and systematic errors from installation. Taking the first derivative *φ̇*, as equal to the roll-rate *p,* of the model equation the following may be obtained: $p = \frac{mh}{{Js}^{2} + ds + c - mhg} \left(u\dot{r}+\dot{u}r+{v}^{¨}\right)$ which provides a dynamic transfer function, where s is the Laplace operator. The IMU being on top of (non-steered) axles may allow for an omission of *v̈*. The remaining equation may become a dynamic relation between yaw rate *r* and roll rate *p* $p = \frac{mh}{{Js}^{2} + ds + c - mhg} \left(u\dot{r}+\dot{u}r\right)$ and which may further be defined as $p = \frac{\frac{mh}{J}}{{s}^{2} + \frac{d}{J} s + \frac{c - mhg}{J}} \left(u\dot{r}+\dot{u}r\right)$

In case it may be assumed a constant velocity of travel the term *u̇r* disappears. Placing the IMU sensor 20 above the (bogie) axles may limit the impact of lateral velocity derivatives and its second derivative may be neglected. In short, if the higher order dynamics are omitted, it may provide $cp = mh \left(u\dot{r}+gp\right)$

From this it may be derived a sensitivity function of angular acceleration to angular rate $p = \frac{mh}{c - mhg} u \dot{r}$

It may not be possible to identify the ingoing parameters *h* and *c*, but the entire sensitivity function may be estimated online during driving. The expression may also indicate a value for center of gravity height *h* where the system may become instable: $h = \frac{c}{mg}$

The IMU 20 may be placed over the axles on the chassis for best results. For instance, attached to the 'rigid' load bodies or 5^{th} wheel. This may improve the use of local IMU signals for angular rates, namely about the local x (forward) and z (upward). These are often referred to as roll rate *p* and yaw rate *r*. The angular acceleration about the z-axis may be derived from the angular rate about the z-axis. It may be low pass filtered first to avoid very noisy signals. This acceleration signal may be compared with the angular rate *p* about x-axis and therefor this signal may need to be low pass filtered with an identical filter to align possible phase changes. The roll rate *p* is a measure about the local axis frequently referred to as roll axis.

Under normal driving conditions with relatively low lateral acceleration levels, the aforementioned signals may correlate well when the yaw acceleration signal is multiplied by forward velocity. The sensitivity function may thus identify the right-hand side of the equation: $\frac{\dot{φ}}{u \dot{r}} = \frac{mh}{c - mhg} = \frac{1}{u} \frac{\partial φ}{\partial r}$

Many parameter estimation techniques may potentially be applied to find ${C}_{roll} = \frac{mh}{c - mhg}$

The identification of *Cᵣₒₗₗ* may allow the system to understand the maximum inputs it may allow and anticipate to that with stability control (e.g. Electronic Stability Control, ESC) interventions in a proactive manner. Consequently, the roll sensitivity value, which may be used as an indication of the lateral behavior of the heavy-duty vehicle 1 and thereby the stability, may be provided as ${C}_{roll} = \frac{p}{u \dot{r}}$ where *p* is the roll rate, *p = φ̇.*

The final roll angle may be estimated by the steady-state lateral acceleration $φ = {C}_{roll} ur = {C}_{roll} {a}_{{y}_{ss}}$

The maximum roll angle may be identified a priori as a design parameter and hence, the maximum obtainable lateral acceleration ${a}_{{y}_{max}} = \frac{{φ}_{max}}{{C}_{roll}}$

The larger the roll compliance the lower permissible lateral acceleration that may be obtained. This maximum lateral acceleration signal may be incorporated in e.g. the ESC to improve control performance.

The maximum permissible roll angle may become a function of *Cᵣₒₗₗ* too, because from the roll mechanics point of view, the larger the roll compliance to lateral acceleration the more lateral displacement moment there is.

FIG. 1 is an exemplary system diagram of the computer system 100 according to an example. The computer system 100 may be implemented in a separate unit in the heavy-duty vehicle 1, or integrated with other units or systems in the heavy-duty vehicle 1, such as the IMU 20, the autonomous system 50 or other devices. The processing circuitry 10 of the computer system 100 may be a dedicated processing circuitry 10 for the functionality of the computer system 100, or a shared processing circuitry with other units or systems of the heavy-duty vehicle 1. The processing circuitry 10 may comprise an input/output, I/O, interface for receiving and transmitting signals, or a transmit/receive unit.

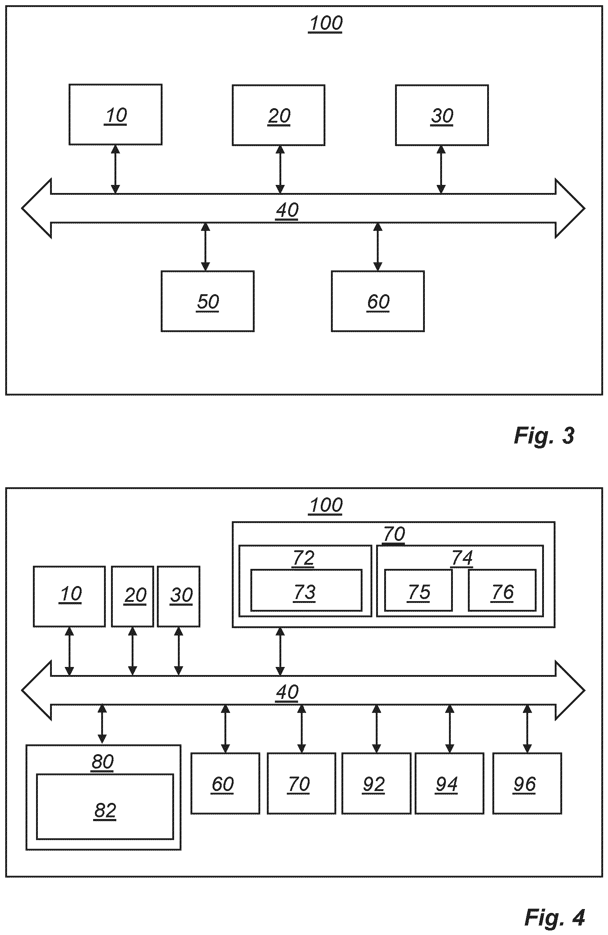

FIG. 3 is another view of the computer system 100 in FIG. 1, according to an example. The processing circuitry 10 reads or receives the roll rate value *p* and a yaw rate value r from the IMU 20. The processing circuitry 10 may communicate with the IMU via a system bus 40. The processing circuitry 10 may further in some examples read or receive a wheel speed measurement from one or more wheel speed sensors 30. The processing circuitry 10 may output the roll sensitivity value Cᵣₒₗₗ to the autonomous system 50 and/or the indication unit 60. The autonomous system 50 may comprise one or more sub-systems, such as an autonomous driving system or an electronic stability control, ESC, system. Each subsystem may communicate independently on the system bus 40.

FIG. 4 is a schematic diagram of a computer system 100 for implementing examples disclosed herein. The computer system 100 is adapted to execute instructions from a computer-readable medium to perform these and/or any of the functions or processing described herein. The computer system 100 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 100 may comprise at least one computing device or electronic device capable of including firmware, hardware, and/or executing software instructions to implement the functionality described herein. The computer system 100 may include processing circuitry 10 (e.g., processing circuitry including one or more processor devices or control units), a memory 70, and a system bus 40. The computer system 100 may include at least one computing device having the processing circuitry 10. The system bus 40 provides an interface for system components including, but not limited to, the memory 70 and the processing circuitry 10. The processing circuitry 10 may include any number of hardware components for conducting data or signal processing or for executing computer code stored in memory 70. The processing circuitry 10 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 10 may further include computer executable code that controls operation of the programmable device.

The system bus 40 may be any of several types of bus structures that may further interconnect to a memory bus (with or without a memory controller), a peripheral bus, and/or a local bus using any of a variety of bus architectures. The memory 70 may be one or more devices for storing data and/or computer code for completing or facilitating methods described herein. The memory 70 may include database components, object code components, script components, or other types of information structure for supporting the various activities herein. Any distributed or local memory device may be utilized with the systems and methods of this description. The memory 70 may be communicably connected to the processing circuitry 10 (e.g., via a circuit or any other wired, wireless, or network connection) and may include computer code for executing one or more processes described herein. The memory 70 may include non-volatile memory 72 (e.g., read-only memory (ROM), erasable programmable read-only memory (EPROM), electrically erasable programmable read-only memory (EEPROM), etc.), and volatile memory 74 (e.g., random-access memory (RAM)), or any other medium which can be used to carry or store desired program code in the form of machine-executable instructions or data structures and which can be accessed by a computer or other machine with processing circuitry 10. A basic input/output system (BIOS) 73 may be stored in the non-volatile memory 72 and can include the basic routines that help to transfer information between elements within the computer system 100.

The computer system 100 may further include or be coupled to a non-transitory computer-readable storage medium such as the storage device 80, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 80 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 80 and/or in the volatile memory 74, which may include an operating system 75 and/or one or more program modules 76. All or a portion of the examples disclosed herein may be implemented as a computer program 82 stored on a transitory or non-transitory computer-usable or computer-readable storage medium (e.g., single medium or multiple media), such as the storage device 80, which includes complex programming instructions (e.g., complex computer-readable program code) to cause the processing circuitry 10 to carry out actions described herein. Thus, the computer-readable program code of the computer program 82 can comprise software instructions for implementing the functionality of the examples described herein when executed by the processing circuitry 10. In some examples, the storage device 80 may be a computer program product (e.g., readable storage medium) storing the computer program 82 thereon, where at least a portion of a computer program 82 may be loadable (e.g., into a processor) for implementing the functionality of the examples described herein when executed by the processing circuitry 10. The processing circuitry 10 may serve as a controller or control system for the computer system 100 that is to implement the functionality described herein.

The computer system 100 may include an input device interface 92 configured to receive input and selections to be communicated to the computer system 100 when executing instructions, such as from a keyboard, mouse, touch-sensitive surface, etc. Such input devices may be connected to the processing circuitry 10 through the input device interface 92 coupled to the system bus 40 but can be connected through other interfaces, such as a parallel port, an Institute of Electrical and Electronic Engineers (IEEE) 1394 serial port, a Universal Serial Bus (USB) port, an IR interface, and the like. The computer system 100 may include an output device interface 94 configured to forward output, such as to a display, a video display unit (e.g., a liquid crystal display (LCD) or a cathode ray tube (CRT)). The computer system 100 may include a communications interface 96 suitable for communicating with a network as appropriate or desired.

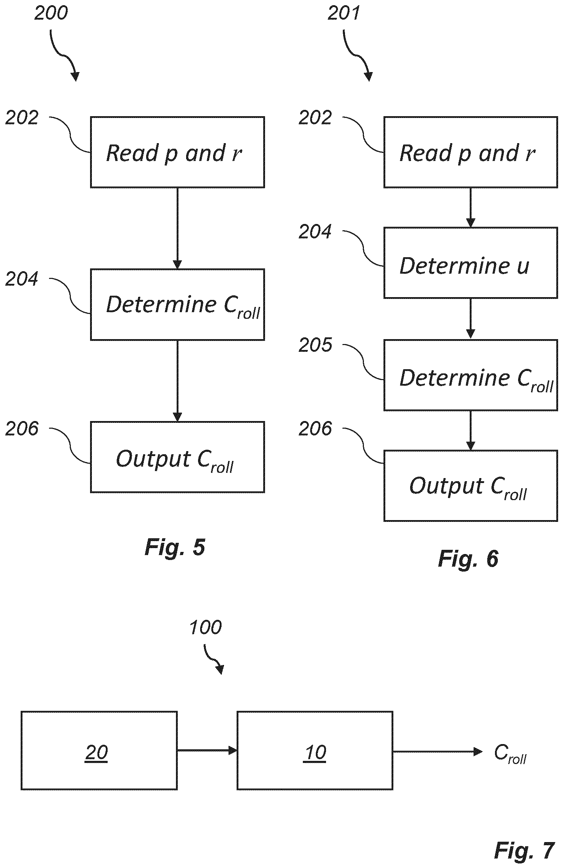

FIG. 5 is a flow chart of a method 200 to determine a roll sensitivity value Cᵣₒₗₗ on a heavy-duty vehicle 3 according to an example. The method 200 comprising the steps of, by processing circuitry 10 of a computer system 100 in the heavy-duty vehicle 3: reading 202 at least a roll rate value *p* and a yaw rate value *r* from an Inertial Measurement Unit, IMU, 20 mounted on a chassis of the heavy-duty vehicle 3; determining 204 a roll sensitivity value Cᵣₒₗₗ as ${C}_{roll} = \frac{p}{u \dot{r}}$, wherein *u* is a longitudinal velocity value of the heavy-duty vehicle 1; and outputting 206 the roll sensitivity value Cᵣₒₗₗ.

FIG. 6 is a flow chart of a method 201 to determine a roll sensitivity value Croll on a heavy-duty vehicle 1 according to an example. Compared to the flow chart of the method 200 in FIG. 5, the method 201 further comprises a step of determining the longitudinal velocity of the heavy-duty vehicle 1. The determination of the longitudinal velocity may be made by the processing circuitry 10, or by another entity and received by the processing circuitry 10. The determination of the longitudinal velocity may be based on measurements by one or more other sensors in the heavy-duty vehicle 1.

FIG. 7 is another view of the computer system 100 of FIG. 1, according to an example. The processing circuitry 10 of the computer system 100 may receive measurement input from the IMU 20. Based on at least said input, the processing circuitry 10 is configured to determine the roll sensitivity value Cᵣₒₗₗ.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system of a heavy-duty vehicle, comprising processing circuitry configured to, during driving of the heavy-duty vehicle: read at least a roll rate value *p* and a yaw rate value *r* from an Inertial Measurement Unit, IMU, mounted on a chassis of the heavy-duty vehicle; determine a roll sensitivity value Cᵣₒₗₗ as ${C}_{roll} = \frac{p}{u \dot{r}}$, wherein *u* is a longitudinal velocity value of the heavy-duty vehicle; and output the roll sensitivity value .

Example 2: The computer system of example 1, wherein the processing circuitry is configured to output the roll sensitivity value, or a change in the roll sensitivity value, as an indication to a driver of the heavy-duty vehicle or to an autonomous system of the heavy-duty vehicle.

Example 3: The computer system of example 1 or 2, wherein the processing circuity is configured to send an alert signal to a driver of the heavy-duty vehicle or to an autonomous system of the heavy-duty vehicle if the roll sensitivity value is above a predetermined threshold.

Example 4: The computer system of example 3, wherein the processing circuitry is configured to send the alert signal to an indication unit of the heavy-duty vehicle, the indication unit being configured to provide an alert indication to the driver.

Example 5: The computer system of any one of examples 1-4, wherein the processing circuitry is further configured to, in response to the roll sensitivity value being above a predetermined threshold, send a control signal for control of speed, steering, and/or suspension of the heavy-duty vehicle.

Example 6: The computer system of example 5, wherein the computer system comprises the autonomous system, and the autonomous system is configured to control speed, steering, and/or suspension of the heavy-duty vehicle in response to the roll sensitivity value being above a predetermined threshold.

Example 7: The computer system of any one of examples 1-6, wherein the IMU is a 6 Degree of Freedom, DOF, IMU.

Example 8: The computer system of any one of examples 1-7, wherein the processing circuitry is configured to determine the longitudinal velocity value of the heavy-duty vehicle based at least on a reading of a measurement from a sensor.

Example 9: The computer system of any one of examples 1-7, wherein the processing circuitry is configured to receive the longitudinal velocity value of the heavy-duty vehicle as a representation of a velocity of travel of the heavy-duty vehicle.

Example 10: The computer system of any one of examples 1-9, wherein the processing circuitry is configured to read a measurement of one or more wheel speed sensors and to determine the longitudinal velocity value of the heavy-duty vehicle based on at least the reading of one or more wheel speed sensors.

Example 11: The computer system of any one of examples 1-10, wherein the longitudinal velocity value is based on a signal proportional to a velocity of travel of the heavy-duty vehicle.

Example 12: A heavy-duty vehicle comprising the computer system of examples 1-11.

Example 13: The heavy-duty vehicle of example 12, comprising the IMU, and wherein the IMU is arranged on the chassis, above an axle, of the heavy-duty vehicle.

Example 14: A computer-implemented method for determining a roll sensitivity value of a heavy-duty vehicle, the method comprising the steps of, by processing circuitry of a computer system in the heavy-duty vehicle, reading at least a roll rate value *p* and a yaw rate value *r* from an Inertial Measurement Unit, IMU, mounted on a chassis of the heavy-duty vehicle; determining a roll sensitivity value as ${C}_{roll} = \frac{p}{u \dot{r}}$, wherein *u* is a longitudinal velocity value of the heavy-duty vehicle; and outputting the roll sensitivity value.

Example 15: The method of example 14, comprising outputting the roll sensitivity value, or a change in the roll sensitivity value, as an indication to a driver of the heavy-duty vehicle or to an autonomous system of the heavy-duty vehicle.

Example 16: The method of example 14 or 15, further comprising a step of sending an alert signal to a driver of the heavy-duty vehicle or to an autonomous system of the heavy-duty vehicle if the roll sensitivity value is above a predetermined threshold.

Example 17: The method of any one of examples 14-16, wherein sending the alert signal comprises instructing an indication unit of the heavy-duty vehicle to provide an alert indication to the driver.

Example 18: The method of any one of examples 14-17, further comprising a step of controlling speed, steering and/or suspension signals of the heavy-duty vehicle based on the roll sensitivity value.

Example 19: The method of example 18, wherein the step of controlling speed, steering and/or suspension signals of the heavy-duty vehicle is performed by an autonomous system of the heavy-duty vehicle in response to the roll sensitivity value being received by the autonomous system and being above a predetermined threshold.

Example 20: The method of any one of examples 14-19, wherein the IMU is a 6 Degree of Freedom, DOF, IMU.

Example 21: The method of any one of examples 14-20, further comprising the step of determining the longitudinal velocity value of the heavy-duty vehicle based at least on a reading of a measurement from a sensor.

Example 22: The method according to any one of claims 14-21, further comprising a step of receiving the longitudinal velocity value of the heavy-duty vehicle as a representation of a velocity of travel of the heavy-duty vehicle.

Example 23: The method of any one of examples 14-22, wherein the processing circuitry is configured to read a measurement of one or more wheel speed sensors and to determine the longitudinal velocity of the heavy-duty vehicle based on at least the reading of one or more wheel speed sensors.

Example 24: The method of any one of claims 14-23, wherein the longitudinal velocity value is based on a signal proportional to a velocity of travel of the heavy-duty vehicle.

Example 25: A computer program product comprising program code for performing, when executed by the processing circuitry, the method of any of examples 14-24.

Example 26: A non-transitory computer-readable storage medium comprising instructions, which when executed by a processing circuitry, cause the processing circuitry to perform the method of any of examples 14-24.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) of a heavy-duty vehicle (1), comprising processing circuitry (10) configured to, during driving of the heavy-duty vehicle (1):
read at least a roll rate value (*p*) and a yaw rate value (*r*) from an Inertial Measurement Unit, IMU, (20) mounted on a chassis of the heavy-duty vehicle (1);
determine a roll sensitivity value (Cᵣₒₗₗ) as ${C}_{roll} = \frac{p}{u \dot{r}}$, wherein *u* is a longitudinal velocity value of the heavy-duty vehicle (1);
output the roll sensitivity value (Cᵣₒₗₗ).

2. The computer system (100) of claim 1, wherein the processing circuitry (10) is configured to output the roll sensitivity value (Cᵣₒₗₗ), or a change in the roll sensitivity value (Cᵣₒₗₗ), as an indication to a driver of the heavy-duty vehicle (1) or to an autonomous system (50) of the heavy-duty vehicle (1).

3. The computer system (100) of claim 1 or 2, wherein the processing circuity (10) is configured to send an alert signal to a driver of the heavy-duty vehicle (1) or to an autonomous system (50) of the heavy-duty vehicle if the roll sensitivity value (Cᵣₒₗₗ) is above a predetermined threshold.

4. The computer system (100) of claim 3, wherein the processing circuitry (10) is configured to send the alert signal to an indication unit (60) of the heavy-duty vehicle (1), the indication unit (60) being configured to provide an alert indication to the driver.

5. The computer system (100) of any one of claims 1-4, wherein the processing circuitry (10) is further configured to, in response to the roll sensitivity value (Cᵣₒₗₗ) being above a predetermined threshold, send a control signal for control of speed, steering, and/or suspension of the heavy-duty vehicle (1).

6. The computer system (100) of claim 5, wherein the computer system (100) comprises the autonomous system (50), and the autonomous system (50) is configured to control speed, steering, and/or suspension of the heavy-duty vehicle (1) in response to the roll sensitivity value (Cᵣₒₗₗ) being above a predetermined threshold.

7. The computer system (100) of any one of claims 1-6, wherein the IMU (20) is a 6 Degree of Freedom, DOF, IMU.

8. The computer system (100) of any one of claims 1-7, wherein the processing circuitry (10) is configured to determine the longitudinal velocity value (u) of the heavy-duty vehicle (1) based at least on a reading of a measurement from a sensor.

9. The computer system (100) of any one of claims 1-8, wherein the processing circuitry (10) is configured to receive the longitudinal velocity value (*u*) of the heavy-duty vehicle (1) as a representation of a velocity of travel of the heavy-duty vehicle (1).

10. The computer system (100) of any one of claims 1-9, wherein the processing circuitry (10) is configured to read a measurement of one or more wheel speed sensors (30) and to determine the longitudinal velocity value (*u*) of the heavy-duty vehicle (1) based on at least the reading of the one or more wheel speed sensors (30).

11. The computer system (100) of any one of claims 1-10, wherein the longitudinal velocity value (u) is based on a signal proportional to a velocity of travel of the heavy-duty vehicle (1).

12. A heavy-duty vehicle (1) comprising the computer system (100) of any of claims 1-11.

13. The heavy-duty vehicle of claim 12, comprising the IMU (20), and wherein the IMU (20) is arranged on the chassis, above an axle, of the heavy-duty vehicle (1).

14. A computer-implemented method (200, 201) for determining a roll sensitivity value (Cᵣₒₗₗ) of a heavy-duty vehicle (1), the method (200) comprising the steps of, by processing circuitry (10) of a computer system (100) in the heavy-duty vehicle (1),
reading (202) at least a roll rate value (*p*) and a yaw rate value (*r*) from an Inertial Measurement Unit, IMU, (20) mounted on a chassis of the heavy-duty vehicle (1);
determining (204) a roll sensitivity value (Cᵣₒₗₗ) as ${C}_{roll} = \frac{p}{u \dot{r}}$, wherein *u* is a longitudinal velocity value of the heavy-duty vehicle (1); and
outputting (206) the roll sensitivity value (Cᵣₒₗₗ).

15. The method (200, 201) of claim 14, comprising outputting the roll sensitivity value (Cᵣₒₗₗ), or a change in the roll sensitivity value (Cᵣₒₗₗ), as an indication to a driver of the heavy-duty vehicle (1) or to an autonomous system (50) of the heavy-duty vehicle (1).

16. The method (200, 201) of claim 14 or 15, further comprising a step of sending an alert signal to a driver of the heavy-duty vehicle (1) or to an autonomous system (50) of the heavy-duty vehicle (1) if the roll sensitivity value (Cᵣₒₗₗ) is above a predetermined threshold.

17. The method (200, 201) of any one of claims 14-16, wherein sending the alert signal comprises instructing an indication unit (60) of the heavy-duty vehicle (1) to provide an alert indication to the driver.

18. The method (200, 201) of any one of claims 14-17, further comprising a step of controlling speed, steering and/or suspension signals of the heavy-duty vehicle (1) based on the roll sensitivity value (Cᵣₒₗₗ).

19. The method (200, 201) of claim 18, wherein the step of controlling speed, steering and/or suspension signals of the heavy-duty vehicle (1) is performed by an autonomous system (50) of the heavy-duty vehicle (1) in response to the roll sensitivity value (Cᵣₒₗₗ) being received by the autonomous system (50) and being above a predetermined threshold.

20. The method (200, 201) of any one of claims 14-19, wherein the IMU (20) is a 6 Degree of Freedom, DOF, IMU.

21. The method (200, 201) according to any one of claims 14-20, further comprising a step of determining the longitudinal velocity value (*u*) of the heavy-duty vehicle (1) based at least on a reading of a measurement from a sensor.

22. The method (200, 201) according to any one of claims 14-21, further comprising a step of receiving the longitudinal velocity value (*u*) of the heavy-duty vehicle (1) as a representation of a velocity of travel of the heavy-duty vehicle (1).

23. The method (200, 201) of any one of claims 14-22, wherein the processing circuitry (10) is configured to read a measurement of one or more wheel speed sensors (30) and to determine the longitudinal velocity (*u*) of the heavy-duty vehicle (1) based on at least the reading of one or more wheel speed sensors (30).

24. The method (200, 201) of any one of claims 14-23, wherein the longitudinal velocity value (*u*) is based on a signal proportional to a velocity of travel of the heavy-duty vehicle (1).

25. A computer program product comprising program code for performing, when executed by the processing circuitry (10), the method of any of claims 14-24.

26. A non-transitory computer-readable storage medium comprising instructions, which when executed by a processing circuitry (10), cause the processing circuitry (10) to perform the method of any of claims 14-24.
